# EUROPEAN PATENT APPLICATION

(11) **EP 2 258 737 A1**
(43) Date of publication of application: **08.12.2010**
(21) Application number: 10009863.1
(22) Date of filing: 13.11.2008
(51) Int. Cl.: C08G 18/10, C08G 18/48, C09D 175/08

(54) **Coating composition comprising an isocyanate terminated polytrimethylene ether polyol**

(30) Priority: 13.11.2007 US 3020 P; 10.11.2008 US 268062
(62) Divisional of application: 08849203.8
(71) Applicant: E. I. du Pont de Nemours and Company, Wilmington, DE 19898 (US)
(72) Inventor: Pennock, Rogert E., Glenolden PA 19036 (US); Corcoran, Patrick Henry, Cherry Hill New Jersey 08003 (US)
(74) Representative: DuPont Performance Coatings Biering/Blum/Kimpel

(57) **Abstract**

A coating composition comprising a crosslinkable component and a crosslinking component comprising an isocyanate terminated polytrimethylene ether polyol.

## Description

### FIELD OF THE INVENTION

This invention is related to coating compositions comprising an isocyanate terminated polytrimethylene ether polyol.

### DESCRIPTION OF THE RELATED ART

To meet the many requirements of an exterior finish for an automobile, the automobile industry is currently applying multi-layer finishes on automobile and truck bodies and parts. Typical of such finishes are layers of the following: (1) an electrocoat layer applied over a substrate, typically a phosphatized cold rolled steel panel, (2) a primer layer, (3) a colored basecoat layer, and (4) a clearcoat layer. Alternatively, a colored topcoat layer is sometimes used in place of the colored basecoat and clearcoat layers.

When vehicles are damaged and/or the multi-layer finish of a vehicle is in need of repair, it is typically sent to a repair shop or a body shop to carry out such repairs, which is typically referred to as refinish work where it pertains to re-coating a vehicle. A body shop typically will repair damage and/or prepare the substrate for the refinish coating composition. Refinish shops may have various procedures for processing or repairing a vehicle. For example, a primer composition may be applied to help smooth imperfections of the body, followed by a colored basecoat composition and a clearcoat composition. It is important to the refinish body shop that applied coating compositions have (i) a short dry time, (ii) satisfactory (that is, excellent) appearance, and (iii) chip resistance from normal abuse such as stones being kicked up from the road surface.

Attempts have been made to formulate a coating composition that has these desired properties with varying degrees of success. It is generally true that an applied coating having a short dry time will not have satisfactory appearance. Conversely, it can be typical that finishes having satisfactory appearance often suffer from the need to have extended drying times.

It is an object of the present invention to provide a crosslinking component that when used in a coating composition, provides a coating having a short dry time, provides an excellent appearance, and resists chipping damage.

It is also an object of this invention to produce a coating composition that replaces a portion of the petroleum derived starting material with one that can be derived from a renewable resource.

### SUMMARY OF THE INVENTION

In one aspect the present invention is a coating composition comprising a crosslinking component comprising a polytrimethylene ether polyol, and wherein said polytrimethylene ether polyol is terminated with isocyanate functionality.

In another aspect, the present invention is a crosslinked coating composition obtained as a product of the reaction between an isocyanate-terminated polytrimethylene ether polyol and a crosslinkable component.

### DETAILED DESCRIPTION OF THE INVENTION

The features and advantages of the present invention will be more readily understood, by those of ordinary skill in the art, from reading the following detailed description. It is to be appreciated that certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both preceded by the word "about." In this manner, slight variations above and below the stated ranges can be used to achieve substantially the same results as values within the ranges. Also, the disclosure of these ranges is intended as a continuous range including every value between the minimum and maximum values.

As used herein, the term "bio-sourced" means that the component was produced from a renewable resource rather than being produced from petroleum feedstock.

"Two-pack coating composition" as the term is used herein means a coating composition having components stored in separate containers. Typically, one container contains a crosslinkable component and optionally contains solvent and/or other adjuvants; the other container typically contains the crosslinking component and optionally solvent and/or other adjuvants. The containers containing the two components are typically sealed to increase the shelf life of the components of the coating composition. The components are mixed just prior to use to form a pot mix, which has a limited pot life, typically ranging from a few minutes (15 minutes to 45 minutes) to a few hours (4 hours to 8 hours). The pot mix is applied as a layer of a desired thickness on a substrate surface, such as an auto body. After application, the layer dries and cures at ambient or elevated temperatures to form a coating on the substrate surface having desired coating properties, such as, short dry time, excellent appearance, and resistance to chipping damage.

As used herein, the term "crosslinking agent" refers to chemical moieties containing isocyanate groups and/or blocked isocyanate groups.

The term "crosslinking component" means the crosslinking agent and any other optional additives such as solvents, catalysts, and/or pigments that may be present.

The term "crosslinkable component" means the crosslinkable compounds and/or polymers and any other optional additives such as solvents, catalysts, and/or pigments that may be present.

Polytrimethylene ether polyol as useful herein comprise a polyether having greater than 80 percent by weight of the repeat units:

"-(OCH₂CH₂CH₂)-"

referred to herein as repeat units of 1,3-propane diol. Preferably, the polytrimethylene ether polyol is a substantially linear diol having one backbone and hydroxy functional group at the terminal positions of the backbone. Alternatively, the polytrimethylene ether polyol can be a star or branched polyether wherein each arm of the star or branched polyether is terminated with a hydroxy functional group.

In one embodiment, the crosslinking agent is a mixture of polymers wherein at least one of the polymers is polytrimethylene ether polyol, wherein the backbone of the polytrimethylene ether polyol has been terminated with isocyanate functionality. Preferably, the polyisocyanate used to terminate the polytrimethylene ether polyol is a diisocyanate and more preferably, the polyisocyanate is a tri- or higher polyisocyanate. The polytrimethylene ether polyol is preferably produced from 1,3-propane diol and more preferably produced from 1,3-propane diol that has been produced from a renewable resource.

Preferably, a bio-route via fermentation of a renewable resource is used to obtain the 1,3-propane diol. One particularly preferred renewable resource is corn since it is readily available and has a high rate of conversion to 1,3-propane diol and can be genetically modified to improve yields to the diol. Typical bioconversion processes are shown in U.S. patent numbers 5,686,276, 5,633,362 and 5,821,092. U.S. '276 teaches a bioconversion process of a fermentable carbon source to 1,3-propane diol by a single microorganism. U.S. '362 and U.S. '092 show the bioconversion of glycerol to 1,3-propane diol by recombinant bacteria harboring a foreign gene encoding a diol dehydratase. The aforementioned patents are incorporated herein by reference. Alternatively the 1,3-propane diol may be obtained from a suitable commercial source.

The polytrimethylene ether diol can be produced via an acid catalyzed polycondensation of 1,3-propane diol as is described in U.S. patent numbers 6,720,459 and 6,977,291. The polytrimethylene ether diol can also be produced via a ring opening polymerization of a cyclic ether, such as oxetane, as described in J. Polymer Sci., Polymer Chemistry Ed. 28, 444 to 449 (1985). The polycondensation of 1, 3-propane diol is preferred over the use of oxetane since 1,3-propane diol is a commercially available material that can be prepared from both petroleum feedstock and renewable resources.

Polytrimethylene ether polyol can be produced according to a process comprising the steps:
a) providing (1) 1,3-propane diol reactant selected from the group consisting of 1,3-propane diol, and/or oligomers or prepolymers of 1,3-propane diol having a degree of polymerization in the range of 2 to 9, and a combination thereof, (2) 20 percent by weight or less of comonomer polyol, and (3) a polycondensation catalyst; and
b) polymerizing the 1,3-propane diol reactant and the less than 20 percent by weight comonomer polyol to form a polytrimethylene ether polyol at less than atmospheric pressure using the polycondensation catalyst.

Copolymers of polytrimethylene ether polyol can also be used. For example, such copolymers are prepared by copolymerizing a monomer mixture comprising 1,3-propane diol with another comonomer polyol, such as, for example: ethylene glycol; cyclohexane dimethylol; hexane diol; 2-methyl-1,3-propane diol; 2,2-dimethyl-1,3-propane diol; trimethylol propane; pentaerythritol; or mixtures thereof. At least 80 percent by weight of the copolymer should be from 1,3-propane diol. Preferably the 1,3-propane diol is obtained from a bio-sourced material.

Polycondensation catalysts useful for the formation of polytrimethylene ether polyols are Lewis acids, Bronsted Acids, super acids, and a combination thereof. More preferably, the catalyst is selected from the group consisting of inorganic acids, organic sulfonic acids, heteropolyacids, and metal salts thereof. Even more preferably the catalyst is selected from the group consisting of sulfuric acid, fluorosulfonic acid, phosphorus acid, p-toluenesulfonic acid, benzenesulfonic acid, phosphotungstic acid, phosphomolybdic acid, trifluoromethanesulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate and zirconium triflate. The most preferred catalyst is sulfuric acid.

In another embodiment, the polycondensation catalyst is selected from the group consisting of zeolites, fluorinated alumina, acid-treated silica, acid-treated silica-alumina, heteropolyacids and heteropolyacids supported on zirconia, titania, alumina, silica or a combination thereof.

A blend of high and low molecular weight polytrimethylene ether polyols can be used wherein the high molecular weight polytrimethylene ether polyol has a number average molecular weight in the range of from 1,000 to 4,000 and the low molecular weight polytrimethylene ether polyol has a number average molecular weight in the range of from 150 to 500. The number average molecular weight for the mixture of high and low molecular weight polymers should be in the range of from 1,000 to 4,000.

To form an isocyanate terminated polytrimethylene ether polyol of structure (I), 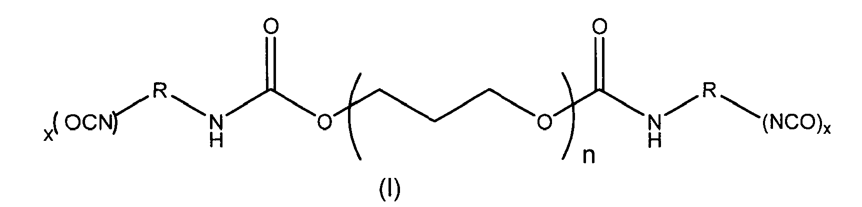 a polytrimethylene ether polyol having the structure of formula (II); 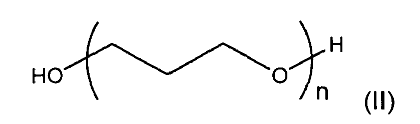 is contacted with a polyisocyanate of the formula (III);

OCN-R-(NCO)ₓ (III)

wherein R is a multivalent moiety chosen from the group of a branched or linear aliphatic group having in the range of from 2 to 50 carbon atoms, a cycloaliphatic group having in the range of from 3 to 50 carbon atoms, an aromatic group having in the range of from 6 to 50 carbon atoms; wherein R can optionally be substituted with groups selected from isocyanurate, biuret, iminooxadiazine dione, allophanate, uretidione, urethane, and a combination thereof; and wherein x is in the range of from 1 to 10
at a polymerization temperature to produce said polymer wherein n is in the range of from 5 to 100.

Typically, the urethane bond formation between the polytrimethylene ether polyol and the polyisocyanate occurs at a temperature in the range of from 0°C to about 100°C. Optionally, a solvent can be added to help regulate the reaction temperature and to adjust the viscosity of the reaction. Optionally, catalyst can be added to help promote the formation of the urethane bond.

The stoichiometric ratio of isocyanate functionality (NCO) in the polyisocyanate to hydroxy groups (OH) in the polytrimethylene ether polyol is provided such that the NCO:OH ratio is in the range of from 1.01:1 to 20:1. Preferably, the NCO:OH ratio is in the range of from 2:1 to 15:1, and more preferably, the NCO:OH ratio is in the range of from 3:1 to 10:1. An excess of isocyanate groups helps to ensure that all of the hydroxy groups in the polytrimethylene ether polyol are capped and that gel formation is avoided.

Solvent and/or catalyst can optionally be used to help promote urethane bond formation. Typical catalysts include dibutyl tin dilaurate, dibutyl tin diacetate, dibutyl tin dichloride, dibutyl tin dibromide, triphenyl boron, tetraisopropyl titanate, triethanolamine titanate chelate, dibutyl tin dioxide, dibutyl tin dioctoate, tin octoate, aluminum titanate, aluminum chelates, zirconium chelate, hydrocarbon phosphonium halides, such as, ethyl triphenyl phosphonium iodide and other such phosphonium salts, and other catalysts or mixtures thereof known to those skilled in the art.

Known and/or conventional organic solvents may be used to facilitate production of the isocyanate functional polytrimethylene ether polyol, with the caveat that such solvents are non-reactive with the reactants. Such solvents include aromatic hydrocarbons, such as, toluene, xylene; ketones, such as, acetone, methyl ethyl ketone, methyl isobutyl ketone, methyl amyl ketone and diisobutyl ketone; esters, such as, ethyl acetate, n-butyl acetate, isobutyl acetate and mixtures of any of the above.

Useful polyisocyanates that can be used to form the isocyanate terminated polytrimethylene ether polyol are aliphatic polyisocyanates, cycloaliphatic polyisocyanates, aromatic polyisocyanates, and polyisocyanate adducts.

Examples of suitable aliphatic, cycloaliphatic and aromatic polyisocyanates that can be used include the following: 2,4-toluene diisocyanate, 2,6-toluene diisocyanate ("TDI"), 4,4-diphenylmethane diisocyanate ("MDI"), 4,4'-dicyclohexyl methane diisocyanate, ("H₁₂MDI"), 3,3'-dimethyl-4,4'-biphenyl diisocyanate ("TODI"), 1,4-benzene diisocyanate, trans-cyclohexane-1,4-diisocyanate, 1,5-naphthalene diisocyanate ("NDI"), 1,6-hexamethylene diisocyanate ("HDI"), 4,6-xylene diisocyanate, isophorone diisocyanate,("IPDI"), other aliphatic or cycloaliphatic di-, tri- or tetra-isocyanates, such as, 1,2-propylene diisocyanate, tetramethylene diisocyanate, 2,3-butylene diisocyanate, octamethylene diisocyanate, 2,2,4-trimethyl hexamethylene diisocyanate, dodecamethylene diisocyanate, omega-dipropyl ether diisocyanate, 1,3-cyclopentane diisocyanate, 1,2-cyclohexane diisocyanate, 1,4-cyclohexane diisocyanate, 4-methyl-1,3-diisocyanatocyclohexane, dicyclohexylmethane-4,4'-diisocyanate, 3,3'-dimethyl-dicyclohexylmethane 4,4'-diisocyanate, polyisocyanates having isocyanurate structural units, isocyanates having uretidione structural units, adducts of 3 molecules of diisocyanates and 1 molecule of water, allophanates, uretidiones, trimers and biurets, for example, of hexamethylene diisocyanate, allophanates, uretidiones, trimers and biurets, for example, of isophorone diisocyanate. 1,6-hexamethylene diisocyanate and isophorone diisocyanate and isocyanurates thereof are preferred because of their commercial availability. Combinations of any of the mentioned polyisocyanates are also useful.

Preferred polyisocyanates are hexamethylene diisocyanate, isophorone diisocyanate, isocyanurates of hexamethylene diisocyanate, allophanates of hexamethylene diisocyanate, biurets of hexamethylene diisocyanate, uretidiones of hexamethylene diisocyanate, isocyanurates of isophorone diisocyanate, allophanates of isophorone diisocyanate, biurets of isophorone diisocyanate, uretidiones of isophorone diisocyanate or a combination thereof.

Tri-functional isocyanates also can be used, such as, triphenyl methane triisocyanate, 1,3,5-benzene triisocyanate, 2,4,6-toluene triisocyanate. Trimers of diisocyanates, such as, the trimer of hexamethylene diisocyanate, sold as TOLONATE® HDT from Rhodia Corporation and the trimer of isophorone diisocyanate are also suitable.

An isocyanate functional adduct can be used, such as the adduct of an aliphatic polyisocyanate and a polyol or the adduct of an aliphatic polyisocyanate and an amine. Also, any of the aforementioned polyisocyanates can be used with a polyol to form an adduct. Polyols, such as, trimethylol alkanes, particularly, trimethylol propane or ethane can be used to form an adduct.

The isocyanate terminated polytrimethylene ether polyols are particularly suited for use as crosslinking agents in a coating composition. Preferably, the isocyanate terminated polytrimethylene ether polyols are present in the crosslinking component in the range of from 1 percent to 50 percent; all percentages are based upon the total amount of crosslinking agent. More preferably, the isocyanate terminated polytrimethylene ether polyols are present in the crosslinking component in the range of from 2 percent to about 40 percent, and most preferably, they are present in the range of from 3 percent to 35 percent. The remaining 50 percent to 99 percent of the crosslinking agent, comprises a polyisocyanate that is not an isocyanate terminated polytrimethylene ether polyol. Suitable polyisocyanates useful for the remaining portion are any of those described above. The isocyanurate trimers of both 1,6-hexamethylene diisocyanate and isophorone diisocyanate are most preferred as the non-isocyanate terminated polytrimethylene ether polyol portion of the crosslinking portion. Combinations of any of those polyisocyanates listed above can also be used.

The isocyanate terminated polytrimethylene ether polyols provide a coating composition that has a better appearance, has higher initial hardness, and exhibits better stone chip resistance than a coating that does not contain the isocyanate terminated polytrimethylene ether polyols. It also has improved properties when compared to isocyanate terminated polyalkylene ether polyols, such as polyethylene oxide ethers, polypropylene oxide polyols, polytetramethylene glycol polyols.

Coating compositions comprising the isocyanate terminated polytrimethylene ether polyol also comprises a crosslinkable component.

The crosslinkable component is a compound, a copolymer or a mixture thereof that is capable of reacting with the crosslinking agents to form a crosslinked network. Preferably, the crosslinkable component is an acrylic polyol, a polyester polyol or a mixture thereof. The crosslinkable functionality in an acrylic polyol and a polyester polyol is the hydroxy functionality. Other crosslinkable functionality may be present but it is preferred that a majority of the crosslinkable functionality is hydroxy groups. Other suitable crosslinkable functionality can be chosen from primary and secondary amines, epoxy groups, silane groups, carboxylic acid groups, urethane groups, amide groups, aspartic amines, aldimines, ketimines, or a mixture thereof.

Suitable acrylic polyols can be composed of polymerized monomers of styrene, α- methyl styrene, C₁ to C₈ alkyl (meth)acrylates such as methyl (meth)acrylate, butyl (meth)acrylate, isobutyl (meth)acrylate or ethyl hexyl (meth)acrylate, a C₃ to C₁₀ cycloalkyl (meth)acrylates such as isobornyl (meth)acrylate, cyclohexyl (meth)acrylate or a combination of these monomers and a hydroxy C₁ to C₈ alkyl (meth)acrylate such as hydroxy ethyl (meth)acrylate, hydroxy propyl (meth)acrylate, hydroxy butyl (meth)acrylate, hydroxy ethyl acrylate, hydroxy propyl acrylate, hydroxy butyl acrylate or a combination of these hydroxyl functional (meth)acrylates.

Typically useful acrylic polyol copolymers can be produced in any of the following methods. Examples of such useful monomer charges are hydroxyethyl methacrylate/hydroxy butyl acrylate/isobornyl acrylate and hydroxyethyl methacrylate/hydroxy propyl methacrylate/hydroxy butyl acrylate/isobornyl acrylate. Preferably, the acrylic polyols can be made from styrene, methyl methacrylate, 2-ethylhexyl methacrylate, and 2-hydroxyethyl methacrylate.

Suitable acrylic polyols can be linear, graft, branched, or a blend thereof and can have a Mw in the range of from 1,000 to 100,000, preferably in the range of from 2,000 to 20,000, more preferably in the range of from 3,000 to 15,000 and a Tg varying in the range of from -70°C to 100°C, preferably in the range of from -50°C to 90°C, and more preferably in the range of from -40°C to 80°C. The acrylic polyols can have a hydroxyl equivalent weight ranging from 200 to 1200, preferably, from 250 to 1000 and more preferably from 300 to 900. Hydroxyl equivalent weight is given as the molecular weight of the polymer divided by average number of hydroxyl groups per molecule as is known in the art.

The graft acrylic polyols can be produced by a polymerization process, described in U.S. Pat. No. 5,290,633, examples 1 and 2 on column 9 lines 15-57. Such graft acrylic polyols can be made using any of the monomers listed above, provided that such graft acrylic polyols have a hydroxy equivalent weight in the aforedescribed range.

Acrylic polyols having a low polydispersity are also suitable. U.S. Pat. No. 4,680,352, example 8 on column 12 lines 23 through 50 provides such an example. Such low polydispersity acrylic polyols can be made using the same monomers used for making linear acrylic polyols, provided that such polymers have a hydroxy equivalent weight in the aforedescribed range.

Conventional processes that are well known in the art can produce linear acrylic polyols. U.S. Pat. No. 6,984,693 example 1 on column line 10 through column 15 lines 18 provides a suitable example of a conventional acrylic synthesis process. Typically, solvent is added to a reactor and brought to reflux at elevated temperatures under an inert gas blanket, typically nitrogen gas. Optionally, before adding heat, the reactor can be fed with a portion of the monomer mixture and one or more initiators, such as the azo type catalysts, which include 2,2'-azobis (2,4 dimethylpentane nitrile); peroxides, such as, di-tertiarybutyl peroxide; and hydroperoxides. Commercially available peroxy type initiator t-butylperoxide or Trigonox® B from AKZO NOBEL, Chicago, Illinois, is suitable for use in the present invention. Upon attaining the desired polymerization temperature, the initiator and the monomer mixture are simultaneously fed to the reactor over a period of time. Optionally, a shot of hydroxyl containing monomer can be added towards the end of polymerization. It may also be desirable to add additional initiator upon completion of the addition of the monomer mixture to ensure completion of the polymerization process.

Solvents that can be used to form the acrylic polyols are ketones such as methyl amyl ketone, methyl isobutyl ketone, methyl ethyl ketone, aromatic hydrocarbons such as toluene, xylene, petroleum naphtha, alkylene carbonates such as propylene carbonate, n-methyl pyrrolidone, ethers, esters, such as butyl acetate, and mixtures of any of the above.

Suitable polyester polyols have a Mw varying in the range of from 200 to 7000, preferably varying in the range of from 300 to 6000, more preferably varying in the range of from 400 to 4000 and a Tg varying in the range of from -80°C to 50°C, preferably varying in the range of -75°C to 40°C and more preferably varying in the range of -70°C to 30°C. The polyester polyols have a hydroxyl equivalent weight ranging from 100 to 1000, preferably, from 150 to 900 and more preferably from 200 to 800.

Suitable polyester polyols can be produced by first reacting a multifunctional alcohol, such as but not limited to, pentaerythritol, hexanepolyol, trimethyol propane with diacids or anhydrides, for example, hexahydrophthalic anhydride or methylhexahydrophthalic anhydride to produce an acid functional polyester. These acid functional polyesters are typically prepared by reacting multifunctional alcohol with less than a stoichiometric amount of the diacid or anhydride.

The acid functional polyester can then be reacted with a monofunctional epoxy under pressure at a reaction temperature in the range of from 60°C to 200°C. Typical reaction time ranges from 1 hour to 24 hours, preferably, 1 hour to 4 hours. The foregoing two-step process ensures that the hydroxyl functionalities are uniformly distributed on each chain of the polyester to produce the polyester polyols. Monofunctional epoxy suitable for use in the present invention include alkylene oxide having 2 to 12 carbon atoms. Ethylene, propylene and butylene oxides are preferred, ethylene oxide is more preferred. Other epoxies, such as, Cardura® E-10 glycidyl ester, supplied by Resolution Performance Products, Houston, Texas can also be used. The details of producing the polyester polyols are described in a PCT Publication WO 99/23131, procedure 2 page 12 lines 13 through 29, which was published on May 14, 1999.

Polyester polyols when in the form of a linear or branched polymer can be any conventional polyester polymerized from polyacids, including cycloaliphatic polycarboxylic acids, and suitable polyols, which include polyhydric alcohols. The polyesters generally have terminal or pendant hydroxyl groups so that they can react with the crosslinking component.

Examples of suitable polyacids are cycloaliphatic polycarboxylic acids, such as, tetrahydrophthalic acid, hexahydrophthalic acid, 1,2-cyclohexanedicarboxylic acid, 1,3-cyclohexanedicarboxylic acid, 1,4-cyclohexanedicarboxylic acid, 4-methylhexahydrophthalic acid, endomethylenetetrahydrophthalic acid, tricyclodecanedicarboxylic acid, endoethylenehexahydrophthalic acid, camphoric acid, cyclohexanetetracarboxylic acid and cyclobutanetetracarboxylic acid. The cycloaliphatic polycarboxylic acids can be used not only in their cis but also in their trans form or a mixture thereof. Examples of suitable other polycarboxylic acids, which, if desired, can be used together with the cycloaliphatic polycarboxylic acids, are aromatic and aliphatic polycarboxylic acids, such as, phthalic acid, isophthalic acid, terephthalic acid, halogenophthalic acids, such as, tetrachloro- or tetrabromophthalic acid, adipic acid, glutaric acid, azelaic acid, sebacic acid, fumaric acid, maleic acid, trimellitic acid, and pyromellitic acid.

Suitable polyhydric alcohols that can be used to form the polyester polyols include ethylene glycol, propanepolyols, butanepolyols, hexanepolyols, neopentylglycol, diethylene glycol, cyclohexanepolyol, cyclohexanedimethanol, trimethylpentanepolyol, ethylbutylpropanepolyol, ditrimethylolpropane, trimethylolethane, trimethylolpropane, glycerol, pentaerythritol, dipentaerythritol, tris(hydroxyethyl)isocyanate, polyethylene glycol and polypropylene glycol. If desired, monohydric alcohols, such as, butanol, octanol, lauryl alcohol, ethoxylated or propoxylated phenols can also be included along with polyhydric alcohols. One example of the commercially available polyester suitable for use is SCD-1040 polyester, which is supplied by Etna Product Inc., Chagrin Falls, Ohio.

Other useful polyester polyols containing terminal hydroxyl groups which can be prepared by initiating the polymerization of lactones with one or more polyols, particularly a cycloaliphatic polyol, in the presence of tin catalysts via conventional polymerization techniques. Such caprolactone polymers are well known and described in Anderson et al. U.S. Pat. No. 5,354,797, on column 6 line 39 through column 7 line 16. A (ε)-caprolactone is typically employed as the lactone component in a 1/1 to 5/1 molar ratio with a cycloaliphatic polyol. Typically useful cycloaliphatic polyol monomers include 1,4-cyclohexanepolyol, 1,4-cyclohexane dimethanol, and 2,2'-bis(4-hydroxycyclohexyl) propane. Preferred caprolactone polymers are formed from ε-caprolactone and 1,4-cyclohexanedimethanol reacted in a molar ratio of from about 2/1 to about 3/1.

The present invention provides a coating composition comprising the isocyanate terminated polytrimethylene ether polyol as a crosslinking agent. Coating compositions comprising the isocyanate terminated polytrimethylene ether polyols can be used as the primer composition, basecoat composition and/or as the clearcoat composition.

Coating compositions comprising the isocyanate terminated polytrimethylene ether polyols are preferably two-component coating compositions. "Two component" or "two-pack" coating composition means a coating composition having the crosslinkable and crosslinking components stored in separate containers. Typically, one container contains a crosslinkable component and optionally contains solvent and/or other adjuvants; the other container typically contains the crosslinking component and optionally solvent and/or other adjuvants. The individual containers are typically sealed to increase the shelf life of the components of the coating composition. The components are mixed just prior to use to form a pot mix, which has a limited pot life, typically ranging from a few minutes (15 minutes to 45 minutes) to a few hours (4 hours to 8 hours). The pot mix is applied as a layer of a desired thickness on a substrate surface, such as an auto body. After application, the layer dries and cures at ambient or elevated temperatures to form a coating on the substrate surface having desired coating properties, such as, short dry time, excellent appearance, and resistance to chipping damage.

Optionally, the isocyanate terminated polytrimethylene ether polyols can be formulated as a "one component" or "one-pack" coating composition. A one-pack coating composition has both the crosslinkable and crosslinking components stored together in one container and optionally contains solvent and/or other adjuvants. The isocyanate terminated polytrimethylene ether polyol and any other isocyanate functional components must first be blocked according to known methods to prevent premature crosslinking. A one-pack coating composition that contains blocked isocyanate functional groups is applied to a substrate and the applied layer is typically heated to unblock the blocked isocyanate functional groups. The unblocked isocyanate functional groups then can contact the crosslinkable functional groups in the crosslinkable component to cure the coating composition.

Coating compositions comprising the isocyanate terminated polytrimethylene ether polyol may be used as a primer layer in which case pigments, such as carbon black, barytes, silica, iron oxide and other pigments that are commonly used in primers in a pigment-to-binder ratio of 10/100 to 300/100 are added. These primers exhibit exceptional adhesion to untreated bare metal substrates, such as, aluminum and steel substrates, and to treated metal substrates, such as, galvanized steel or previously coated metal substrates and provide excellent stone chip resistance. As used herein, "binder" refers to the film-forming components of a coating composition. Catalysts, solvents, and other non-film forming adjuvants are not included in this definition.

Coating compositions comprising the isocyanate terminated polytrimethylene ether polyol may be used as a basecoat or as a pigmented monocoat topcoat. Both of these compositions require the presence of pigments. Typically, a pigment-to-binder ratio of 0.1/100 to 200/100 is used depending on the color and type of pigment used. The pigments are formulated into mill bases by conventional procedures, such as, grinding, sand milling, and high speed mixing. Generally, the mill base comprises pigment and a binder or a dispersant or both in a solventborne or aqueous medium. The mill base is added in an appropriate amount to the coating composition with mixing to form a pigmented coating composition.

Any of the conventionally-used organic and inorganic pigments, such as, white pigments, like, titanium dioxide, color pigments, metallic flakes, such as, aluminum flake, special effects pigments, such as, coated mica flakes, coated aluminum flakes and the like and extender pigments can be used. It may be desirable to add flow control additives.

Coating compositions comprising the isocyanate terminated polytrimethylene ether polyol may be used as a clear coat that is applied over a pigmented basecoat.

Coating compositions can contain solvents used to reduce the viscosity of the coating composition required, for example, for spray application. Suitable solvents include organic solvents such as, aromatic hydrocarbons, such as, petroleum naphtha or xylenes; esters, such as, butyl acetate, t-butyl acetate, isobutyl acetate or hexyl acetate; ketones, such as, methyl ethyl ketone, methyl isobutyl ketone, or methyl amyl ketone; and glycol ether esters, such as, propylene glycol monomethyl ether acetate. The amount of organic solvent added depends upon the desired solids level as well as the desired amount of VOC of the composition. If desired, the organic solvent can be added to any of the components of the coating composition.

The amount of solvent added to the coating composition can be adjusted to provide the composition with a VOC in the range of from 0.12 kilograms (1.0 pounds per gallon) to 0.72 kilograms (6.0 pounds per gallon) of the solvent per liter of the coating composition.

The coating composition of the present invention can also contain conventional additives, such as but not limited to, stabilizers, rheology control agents, flow agents, and toughening agents. Typically useful formulation additives include leveling and flow control agents, for example, RESIFLOW®S (polybutylacrylate), BYK® 320 or 325 (silicone leveling agents, supplied by BYK Chemie, Wallingford, Connecticut), BYK® 347 (polyether-modified siloxane, supplied by BYK Chemie, Wallingford, Connecticut) and rheology control agents, such as, fumed silica. The inclusion of additional additives will, of course, depend on the intended use of the coating composition. Any additives that would adversely affect the clarity of the cured coating will not be included when the composition is used as a clear coating. The foregoing additives can be added to any of the components.

To improve the weatherability of the coating resulting from the coating composition, 0.1 to 5 weight percent, preferably 0.5 to 2.5 weight percent and more preferably 1 to 2 weight percent of ultraviolet light stabilizer screeners, quenchers and antioxidants can be added to the composition. All percentages being based on the total weight of the crosslinkable, crosslinking and catalyst component solids. Typical ultraviolet light screeners and stabilizers include the following:
Benzophenones, such as, hydroxy dodecycloxy benzophenone, 2,4-dihydroxy benzophenone, and hydroxy benzophenones containing sulfonic acid groups.
Benzoates, such as, dibenzoate of diphenylol propane and tertiary butyl benzoate of diphenylol propane.
Triazines, such as, 3,5-dialkyl-4-hydroxyphenyl derivatives of triazine and sulfur containing derivatives of dialkyl-4-hydroxy phenyl triazine, hydroxy phenyl-1,3,5-triazine.
Triazoles, such as, 2-phenyl-4-(2,2'-dihydroxy benzoyl)-triazole and substituted benzotriazoles, such as hydroxy-phenyltriazole.
Hindered amines, such as, bis( 1,2,2,6,6-pentamethyl-4-piperidinyl sebacate) and di[4-(2,2,6,6-tetramethyl piperidinyl)]sebacate; and any combination of any of the above.

When used as a two-pack coating composition, the crosslinking component is added to the crosslinkable component to form a pot mix that is applied to a substrate. A layer of the pot mix is typically applied to a substrate by conventional techniques, such as spraying, electrostatic spraying, roller coating, dipping or brushing. The pot mix layer then cures under ambient conditions in the range of 10 minutes to 24 hours, preferably in the range of 60 minutes to 16 hours or overnight to form a coating on the substrate having the desired coating properties. It is understood that the actual curing time depends upon the thickness of the applied layer, the type of crosslinking chemistry being used and on the presence or absence of any suitable drying devices, such as fans that assist in continuously flowing air over the coated substrate to accelerate the dry rate. If desired, baking the coated substrate at a temperature of about 40°C to 100°C for 10 minutes to 60 minutes may further accelerate the cure rate. The foregoing baking step is particularly useful under OEM (Original Equipment Manufacture) conditions.

The coating composition can be applied by conventional techniques, such as, spraying, electrostatic spraying, dipping, brushing, and flow coating.

The coating composition is particularly useful for the repair and refinish of automobile bodies and truck bodies and parts and is formulated as an automotive paint. Preferably, the coating composition is used as a clearcoat, pigmented basecoat, and as a primer, sealer or primer surfacer.

The novel composition has uses for coating any and all items manufactured and painted by automobile sub-suppliers, frame rails, commercial trucks and truck bodies, including but not limited to beverage bottles, utility bodies, ready mix concrete delivery vehicle bodies, waste hauling vehicle bodies, and fire and emergency vehicle bodies, as well as any potential attachments or components to such truck bodies, buses, farm and construction equipment, truck caps and covers, commercial trailers, consumer trailers, recreational vehicles, including but not limited to, motor homes, campers, conversion vans, vans, large commercial aircraft and small pleasure aircraft, pleasure vehicles, such as, snow mobiles, all terrain vehicles, personal watercraft, motorcycles, and boats. The novel composition also can be used as a coating for industrial and commercial new construction and maintenance thereof; cement and wood floors; walls of commercial and residential structures, such as, office buildings and homes; amusement park equipment; concrete surfaces, such as, parking lots and drive ways; asphalt and concrete road surface, wood substrates, marine surfaces; outdoor structures, such as, bridges, towers; coil coating; railroad cars; printed circuit boards; machinery; OEM tools; signs; fiberglass structures; sporting goods; and sporting equipment.

### EXAMPLES

Unless otherwise specified, all ingredients are available from the Aldrich Chemical Company, Milwaukee, Wisconsin.

DESMODUR^{®} N3300 polyisocyanate is available from BayerMaterial Science Pittsburgh, Pennsylvania.

"Tg" is the glass transition temperature as determined by DSC (Differential Scanning Calorimetry). To measure the Tg by this method, the polymer samples were dried, preheated to 120°C, rapidly cooled to - 100°C, and then heated to 150°C at a rate of 20°C/min while data was being collected. The Tg was measured at the midpoint of the inflection using the half-height method.

"GPC weight average molecular weight" or "Mw" is a weight average molecular weight measured by utilizing gel permeation chromatography. A high performance liquid chromatograph (HPLC) supplied by Hewlett-Packard, Palo Alto, California was used. Unless stated otherwise, the liquid phase used was tetrahydrofuran and the standard was polymethyl methacrylate or polystyrene. Units given for the molecular weight are given in Daltons.

### Crosslinking agent 1 - Preparation of isocyanate terminated polytrimethylene ether polyol.

**TABLE 1**

| Ingredient | Grams |
|---|---|
| Polytrimethylene ether polyol¹ | 791.13 |
| DESMODUR^{®} N3300 | 1308.25 |
| Dibutyltin dilaurate² | 6.30 |
| Butyl acetate | 515.95 |

| | |
|---|---|
| 1. Available as CERENOL H-1000^{®} from DuPont, Wilmington, Delaware. The polytrimethylene ether polyol has a number average molecular weight of 936. 2. 1% dibutyltin dilaurate in butyl acetate. | |

To a flask equipped with a nitrogen inlet, thermometer, stirrer, and a heating mantle was added the ingredients of Table 1. The mixture was held at 60°C for 2 hours. After stirring at 60°C for 2 hours, the heating mantle was removed and butyl acetate (378.37 grams) was added and the mixture was stirred for 30 minutes.

### Basecoat A

473 ml of CHROMA PREMIER^{®} PINK FROST basecoat was mixed with 473 ml CHROMASYSTEM BASEMAKER 7175S^{®} reducer (both available from DuPont, Wilmington, Delaware) and 31 grams of crosslinking agent 1 to form a pot mix. The pot mix was used as is.

### Comparative Basecoat B

473 ml of CHROMA PREMIER^{®} PINK FROST basecoat was mixed with 473 ml CHROMASYSTEM BASEMAKER 7175S^{®} reducer (both available from DuPont, Wilmington, Delaware) to form a pot mix. The pot mix was used as is.

### Clearcoat C

544.1 grams of DuPont TC35000® Low VOC/Low HAPS Clearcoat and 300.5 grams of DuPont 12305S Activator (both available from DuPont, Wilmington, Delaware) and 89.8 grams of crosslinking agent 1 were combined to form a pot mix. The pot mix was used as is.

### Comparative Clearcoat D

544.1 grams of DuPont TC35000® Low VOC/Low HAPS Clearcoat and 300.5 grams of DuPont 12305S Activator (both available from DuPont, Wilmington, Delaware) were combined to form a pot mix. The pot mix was used as is.

A layer of basecoat coating composition A or B was applied to electrocoated steel panels according to Table 2. The layer of basecoat composition was applied using a Sata HVLP Gravity feed spray gun and was dried at 25°C for 15 minutes. A layer of clearcoat composition C or D was applied to the layer of basecoat composition according to Table 2. The combined layers were then baked at 60°C for 30 minutes.

After 72 hours, the panels were evaluated for stone chip resistance according to ASTM D3170. The stone chips are rated 1 through 10 according to the number of chips caused by the stones. The higher the rating number, the less chips present. The chips themselves are rated for size according to an A/B/C/D scale. An "A" rating means that the majority of chips are less than 1 mm in diameter. Panels rated a "D" contain a majority of chips greater than 6mm in size.

**TABLE 2**

| | Basecoat | Clearcoat | Chip Rating | |
|---|---|---|---|---|
| | | | 1 Pint | 3 Pint |
| Panel # 1 (comparative example) | Comparative Basecoat B | Comparative Clearcoat D | 6B | 3B |
| Panel # 2 | Comparative Basecoat B | C | 7B | 5B |
| Panel # 3 | A | Comparative Clearcoat D | 6A | 5A |
| Panel # 4 | A | C | 7A | 6A |

According to Table 2, it can be seen that the chip rating of panels containing the isocyanate terminated polytrimethylene ether polyol are rated better than panels that do not contain isocyanate terminated polytrimethylene ether polyols. Panel # 4, wherein both the basecoat and the clearcoat compositions contained the isocyanate terminated polytrimethylene ether polyol showed the best overall chip rating.

### Basecoat E

473 ml of CHROMA PREMIER^{®} MEDIUM GOLD BEIGE basecoat was mixed with 473 ml CHROMASYSTEM BASEMAKER 7175S^{®} reducer (both available from DuPont, Wilmington, Delaware). To 325 grams of this mixture was added 12.2 grams of crosslinking agent 1 to form a pot mix. The pot mix was used as is.

### Basecoat F

473 ml of CHROMA PREMIER^{®} MEDIUM GOLD BEIGE basecoat was mixed with 473 ml CHROMASYSTEM BASEMAKER 7175S^{®} reducer (both available from DuPont, Wilmington, Delaware). To 325 grams of this mixture was added 24.4 grams of crosslinking agent 1 to form a pot mix. The pot mix was used as is.

### Basecoat G

473 ml of CHROMA PREMIER^{®} MEDIUM GOLD BEIGE basecoat was mixed with 473 ml CHROMASYSTEM BASEMAKER 7175S^{®} reducer (both available from DuPont, Wilmington, Delaware). To 325 grams of this mixture was added 36.6 grams of crosslinking agent 1 to form a pot mix. The pot mix was used as is.

### Comparative Basecoat H

473 ml of CHROMA PREMIER^{®} MEDIUM GOLD BEIGE basecoat was mixed with 473 ml CHROMASYSTEM BASEMAKER 7175S^{®} reducer (both available from DuPont, Wilmington, Delaware).

A layer of basecoat compositions E, F, G and H were spray applied to FILON® G-111 gel coated fiber reinforced polyester panels, available from Crane Composites, Stamford, Connecticut, using a Sata HVLP Gravity feed spray gun and was dried at 25°C for 15 minutes. A layer of comparative clearcoat D was applied to each of the panels.

The combined layers were then baked at 60°C for 30 minutes. After 72 hours, the panels were evaluated for stone chip resistance according to ASTM D3170. The results of the chip resistance test are shown in Table 3.

**TABLE 3**

| Basecoat Composition | Amount of Crosslinking agent 1 (grams/100 grams coating composition) | Chip Rating |
|---|---|---|
| Comparative H | 0 | 7B, 6A |
| E | 3.8 | 8B, 6A |
| F | 7.5 | 9B, 6A |
| G | 11.3 | 6A |

The test results in Table 3 shows that with increasing amounts of the isocyanate terminated polytrimethylene ether polyol, the basecoats have fewer large chips. In coatings E, F and Comparative H, the panels had some chips that were rated 'B' (chips ranging from 1 mm to 1.3 mm) and chips rated 'A' (chips smaller than 1 mm). The panel coated with basecoat G had no chips larger than 1 mm.

## Claims

1. A coating composition comprising a crosslinkable component and a crosslinking component, wherein the crosslinking component comprises an isocyanate terminated polytrimethylene ether polyol.

2. The coating composition of claim 1, wherein the isocyanate-terminated polytrimethylene ether polyol is present in the crosslinking component in the range from 1 to 50 percent and the remaining 50 to 99 percent comprises a polyisocyanate other than isocyanate terminated polytrimethylene ether polyol.

3. The coating composition of claim 2, wherein the polyisocyanate other than isocyanate terminated polytrimethylene ether polyol is the isocyanurate trimer of 1,6-hexamethylene diisocyanate and/or the isocyanurate trimer of isophorone diisocyanate.

4. The coating composition of any one of the preceding claims, wherein the crosslinkable component is selected from the group consisting of acrylic polyol, polyester polyol, and a combination thereof.

5. The coating composition of any one of the preceding claims, wherein the coating composition is a two-pack coating composition.

6. Use of a coating composition of any one of the preceding claims as a clearcoat composition, a pigmented monocoat topcoat composition, a basecoat composition, or a primer composition.

7. Use of a coating composition of any one of claims 1 to 5 for the repair and refinish of automobile bodies, truck bodies and parts.
